# EUROPÄISCHE PATENTSCHRIFT

(11) **EP 0 564 807 B1**
(45) Veröffentlichungstag und Bekanntmachung des Hinweises auf die Patenterteilung: **29.11.1995**
(21) Anmeldenummer: 93103197.5
(22) Anmeldetag: 01.03.1993
(51) Int. Cl.: B05C 11/10, B29B 13/02

(54) **Vorrichtung zum Fördern oder Dosieren von viskosen Massen**
Apparatus for delivering and metering a viscous product
Dispositif de transport et de dosage pour produits visqueux

(30) Priorität: 04.04.1992 DE 4211370
(43) Veröffentlichungstag der Anmeldung: 13.10.1993
(73) Patentinhaber: SCA SCHUCKER GmbH, D-75203 Königsbach-Stein (DE)
(72) Erfinder: Schucker, Josef, W-7530 Pforzheim (DE)
(74) Vertreter: Wolf, Eckhard, Dr.-Ing.

(56) Entgegenhaltungen:
- US-A- 2 283 414
- US-A- 3 976 229
- US-A- 4 073 409

## Beschreibung

Die Erfindung betrifft eine Vorrichtung zum Fördern oder Dosieren von viskosen Massen, insbesondere von im erhitzten Zustand fließfähigen Klebe- oder Dichtstoffen, aus einem mittels eines Druckkolbens entleerbaren Vorratsbehälter durch eine Förderleitung zu einem Auftraggerät, mit einem saugseitig über ein wahlweise verschließbares Absperrorgan mit dem Vorratsbehälter und druckseitig über die Förderleitung mit Auftraggerät verbundenen Förderzylinder und einem im Förderzylinder verschiebbar angeordneten Verdrängungskörper, der über einen durch eine rückwärtige Zylinderöffnung hindurchgreifenden Stößel mit der Kolbenstange eines pneumatischen oder hydraulischen Antriebszylinders starr verbunden ist.

Es ist eine Vorrichtung dieser Art bekannt (DE-AS 1 222 825 und US-A-3 976 229), bei der sowohl der saugseitige als auch der druckseitige Anschluß im Bereich des Bodens des Förderzylinders angeordnet ist und bei dem die Kolben des Förder- und des Antriebszylinders durch eine gemeinsame massive Kolbenstange miteinander verbunden sind. Bei dieser Anordnung werden vor allem die im Förderzylinderraum entstehenden Toträume als nachteilig empfunden, in denen sich pastöses Fördergut ablagern kann. Dieser Nachteil wirkt sich insbesondere bei der Förderung von Kleb- oder Dickstoffen aus, die beim Aufheizen oder unter Luftzutritt verharzen und dadurch den Förderzylinder zusetzen können.

Ausgehend hiervon liegt der Erfindung die Aufgabe zugrunde, die bekannte Vorrichtung der eingangs angegebenen Art dahingehend zu verbessern, daß Toträume im Bereich des Förderzylinders sowie Ablagerungen entlang der Förderstrecke des Förderguts vermieden werden.

Zur Lösung dieser Aufgabe werden die im Patentanspruch 1 angegebenen Merkmale vorgeschlagen. Vorteilhafte Ausgestaltungen und Weiterbildungen der Erfindung ergeben sich aus den Unteransprüchen.

Die erfindungsgemäße Lösung geht von dem Gedanken aus, daß eine totraumfreie Ausbildung des Förderzylinders nur dann gewährleistet ist, wenn das Fördergut dem Förderzylinder axial zugeführt und in gleicher Richtung axial abgeführt wird und wenn trotzdem die Förderleitung über ihre gesamte Länge von der Austrittstelle aus dem Förderzylinder bis zum Auftraggerät von außen her z.B. für Heizzwecke frei zugänglich ist. Um dies zu erreichen, wird gemäß der Erfindung vorgeschlagen, daß der Verdrängungskörper und dessen Stößel einen mit dem Innenraum des Förderzylinders kommunizierenden durchgehenden Axialkanal aufweisen und daß der Axialkanal über ein mit dem Stößel mitbewegtes, außerhalb des Antriebszylinders vorbeigeführtes Leitungsstück mit der Förderleitung verbunden ist.

Das Leitungsstück kann dabei als starres Rohrstück und die Förderleitung als flexibler Schlauch oder als Gelenkrohr ausgebildet sein. Alternativ dazu kann das Leitungsstück auch als flexibles Schlauchstück oder als Gelenkrohr ausgebildet sein.

Da mit der erfindungsgemäßen Fördervorrichtung in der Förderleitung ein hoher Förderdruck aufgebaut werden kann, ist es zweckmäßig, in dem Leitungsstück, vorzugsweise an dessen förderleitungsseitigem Ende, ein wechselweise mit dem saugseitigen Absperrorgan verschließbares druckseitiges Absperrorgan anzuordnen. Die Schließorgane sind dabei vorteilhafterweise als über eine zentrale Steuerungsanordnung ansteuerbare Ventile oder Absperrhähne ausgebildet.

Zur Verbesserung der Strömungsverhältnisse im Inneren des Förderzylinders ist es zweckmäßig, den Axialkanal zum Förderzylinderinneren hin trichterförmig zu erweitern.

Mit den erfindungsgemäßen Maßnahmen ist es möglich, den Hohlstößel, das Rohrleitungsstück und die Förderleitung mit einer Heizwicklung zu versehen. Ebenso kann der Förderzylinder eine vorzugsweise als Heizwicklung oder Heizpatrone ausgebildete Heizeinrichtung aufweisen, wobei zweckmäßig auch der Vorratsbehälter mittels einer Heizeinrichtung aufheizbar sein sollte. Um den Stößel trotz Heizwicklung problemlos verschieben zu können, wird er vorzugsweise berührungsfrei durch das stangenseitige Ende des Förderzylinders hindurchgeführt.

Gemäß einer bevorzugten Ausgestaltung der Erfindung sind der Hohlstößel des Verdrängungskörpers und die Antriebskolbenstange über ein das seitlich überstehende, gegebenenfalls mit einer Heizwicklung versehene Leitungsstück übergreifendes Joch starr miteinander verbunden, wobei das Leitungsstück vorteilhafterweise fluchtend an das stromabseitige Kanalende des Hohlstößels angeschlossen und als gebogenes Rohr- oder Schlauchstück ausgebildet ist. Diese Merkmale tragen maßgeblich dazu bei, daß der Hohlstößel nicht durch den Zylinderraum des Antriebszylinders hindurchgreifen muß, was wegen der undefinierten Temperaturverhältnisse im Antriebszylinder zu Komplikationen beim Wärmeübergang von und zum Fördermedium führen würde.

Gemäß einer weiteren bevorzugten Ausgestaltung der Erfindung ist der Vorratsbehälter als Faßpresse und der Druckkolben als mit einem Auslaßstutzen versehene, gegen den Faßinhalt anpreßbare Folgeplatte ausgebildet, während der Förderzylinder mit seiner saugseitigen Öffnung lösbar mit dem Auslaßstutzen der Folgeplatte verbunden ist. Die Folgeplatte bildet in diesem Falle also zugleich eine Trägerplatte für die gesamte Fördervorrichtung. Das saugseitige Absperrorgan kann bei dieser Anordnung im Auslaßstutzen der Folgeplatte angeordnet werden. Die Folgeplatte wird bei dieser Anordnung zwar mit Hilfe einer Presse in das Vorratsfaß eingedrückt. Gleichwohl besteht die Gefahr, daß der dadurch erzielte Befülldruck nicht ausreicht, um das zähe Fördergut in den Förderzylinder zu fördern. Dies kann dadurch vermieden werden, daß über den Antriebszylinder ein zusätzlicher Saugdruck erzeugt wird, was erfindungsgemäß dadurch erreicht wird, daß der Antriebszylinder als doppeltwirkender Pneumatik- oder Hydraulikzylinder ausgebildet ist.

Im folgenden wird die Erfindung anhand eines in der Zeichnung in schematischer Weise dargestellten Ausführungsbeispiels näher erläutert. Es zeigen:
- Fig. 1: einen Schnitt durch eine Fördervorrichtung im Zustand des Befüllens des Förderzylinders bei abgesperrter Förderleitung;
- Fig. 2: die Fördervorrichtung nach Fig. 1 im Zustand des Entleerens des Förderzylinders bei offener Förderleitung.

Die in der Zeichnung dargestellte Fördervorrichtung ist zum Fördern und Dosieren von zähen pastösen Massen, insbesondere von in erhitztem Zustand fließfähigen Kleb- oder Dichtstoffen, bestimmt.

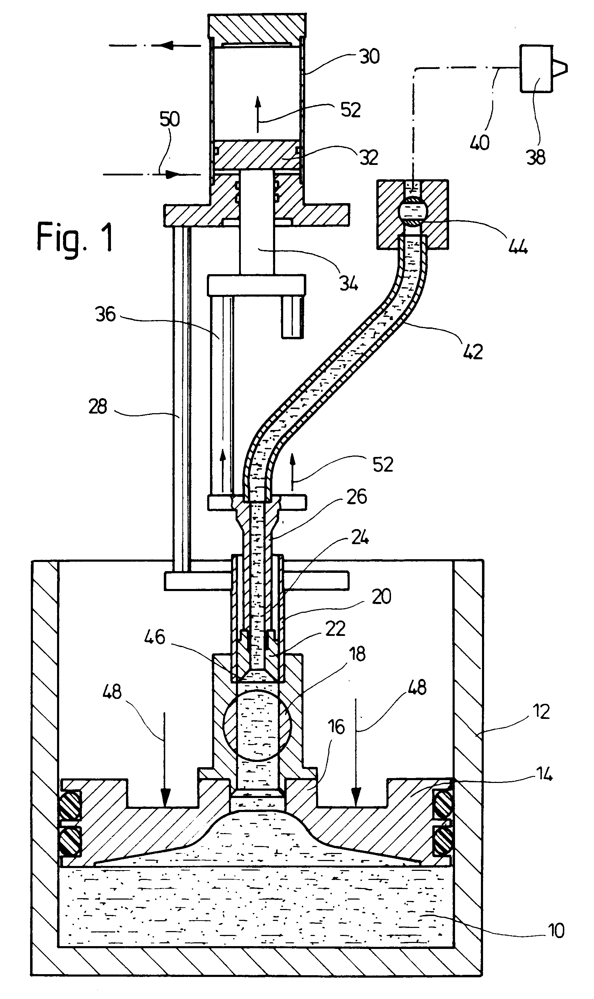

Die Fördervorrichtung besteht im wesentlichen aus einem, die zu fördernde pastöse Masse 10 enthaltenden faßartigen Vorratsbehälter 12, einer in den Vorratsbehälter eingreifenden und dichtend auf der pastösen Masse 10 aufliegenden kolbenartigen Folgeplatte 14, einem am Auslaßstutzen 16 der Folgeplatte 14 angeordneten Absperrhahn 18, einem saugseitig an die Auslaßseite des Absperrhahns 18 angeschlossenen Förderzylinder 20, einem im Förderzylinder 20 verschiebbar angeordneten kolbenartigen Verdrängungskörper 22, einem mit dem Verdrängungskörper 22 und dessen Axialbohrung 24 fluchtend verbundenen Hohlstößel 26, einem über ein erstes Joch 28 starr mit dem Förderzylinder 20 verbundenen, als doppeltwirkender Hydraulikzylinder ausgebildeten Antriebszylinder 30, dessen Antriebskolben 32 über seine Kolbenstange 34 und ein zweites Joch 36 starr mit dem Hohlstößel 26 verbunden ist, und einer zu einem Auftraggerät 38 führenden Förderleitung 40, die über ein gebogenes Rohrstück 42 und einen zweiten Absperrhahn 44 mit dem Axialkanal 24 des Hohlstößels 26 hydraulisch verbunden ist. Der Hohlstößel 26 greift berührungsfrei in den Förderzylinder 20 ein. Er kann daher, ebenso wie das Rohrstück 42 und die Förderleitung 40 mit einer Heizwicklung versehen werden, die in der in Fig. 1 gezeigten Position des Hohlstößels 26 mit diesem in den Förderzylinder 20 eingreift. Der Axialkanal 24 ist an seinem freien Ende 46 im Bereich des Verdrängungskörpers 22 in Richtung Zylinderinneres konisch erweitert, so daß keine stufenförmigen Toträume, an denen sich Fördergut absetzen könnte, entstehen.

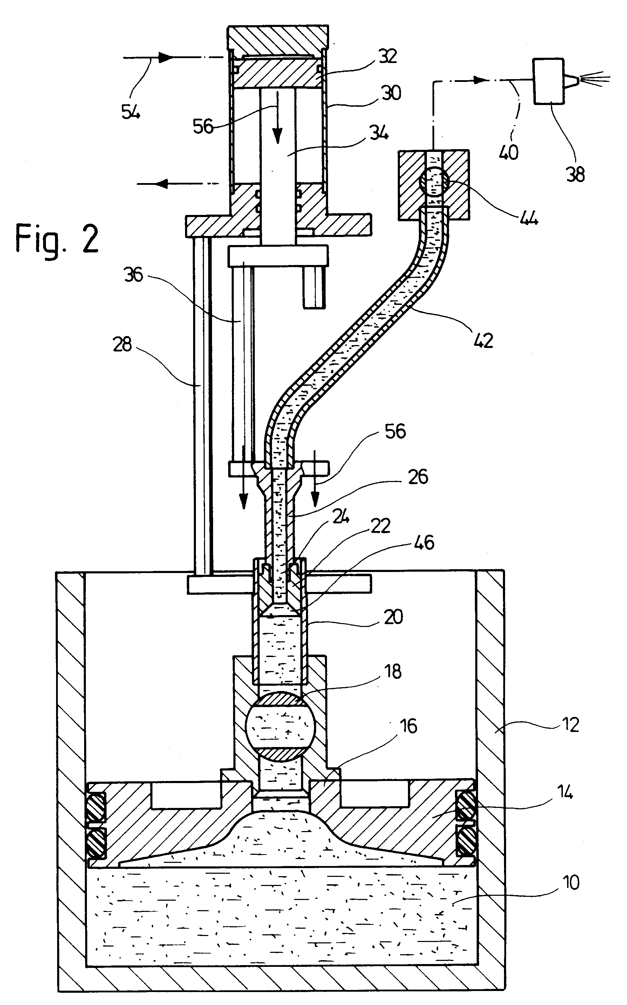

Bei dem in Fig. 1 gezeigten Betriebszustand ist der saugseitige Absperrhahn 18 offen, während der druckseitige Absperrhahn 44 geschlossen ist. Der Antriebskolben 32 und der Verdrängungskörper 22 befinden sich in ihrer in Richtung Vorratsbehälter verschobenen Endstellung, in der der Förderzylinder 20 vollständig entleert ist. Wird nun über eine nicht dargestellte Faßpresse in Richtung der Pfeile 48 Druck auf die Folgeplatte 14 ausgeübt und der Antriebszylinder 30 gleichzeitig über ausgeübt und der Antriebszylinder 30 gleichzeitig über seinen unteren Hydraulikanschluß in Richtung des Pfeils 50 mit Druckflüssigkeit beaufschlagt, so bewegt sich die aus dem Antriebskolben 32 und dem Verdrängungskörper 22 bestehende Einheit in Richtung der Pfeile 52 nach oben, während gleichzeitig der Förderzylinder 20 durch den Absperrhahn 18 hindurch mit pastöser Masse 10 aus dem Vorratsbehälter 12 gefüllt wird. Die Fordergutsäule in der Axialbohrung 24 und im Rohrstück 42 bleibt wegen des geschlossenen Absperrhahns 44 stationär. Sobald die in Fig. 2 gezeigte obere Endposition des Antriebskolbens 32 und des Verdrängungskörpers 22 erreicht wird, in der der Förderzylinder mit dem patösen Fördergut 10 gefüllt ist, werden die Absperrhähne 18 und 44 umgesteuert. Gleichzeitig wird der obere Hydraulikanschluß des Antriebszylinders 30 in Richtung des Pfeils 54 mit Druckflüssigkeit beaufschlagt, so daß die aus Antriebskolben 32 und Verdrängungskörper 22 bestehende Einheit in Richtung der Pfeile 56 nach unten bewegt wird. Hierbei wird die im Förderzylinder 20 befindliche Masse 10 über das mitbewegte Rohrstück 42 und die Förderleitung 40 in Richtung Auftraggerät 38 verdrängt und von diesem beispielsweise auf ein nicht dargestelltes Werkstück aufgespritzt. Nach Beendigung des Förderzyklus kann wieder der in Verbindung mit Fig. 1 beschriebene Füllzyklus eingeleitet werden.

## Patentansprüche

1. Vorrichtung zum Fördern oder Dosieren von viskosen Massen (10) insbesondere von in erhitztem Zustand fließfähigen Kleb- oder Dichtstoffen, aus einem mittels eines Druckkolbens (14) entleerbaren Vorratsbehälter (12) durch eine Förderleitung (40) zu einem Auftraggerät (38) mit einem saugseitig über ein wahlweise verschließbares Absperrorgan (18) mit dem Vorratsbehälter (12) und druckseitig über die Förderleitung (40) mit dem Auftraggerät (38) verbundenen Förderzylinder (20) und einem im Förderzylinder (20) verschiebbar angeordneten Verdrängungskörper (22), der über einen durch eine rückwärtige Zylinderöffnung hindurchgreifenden Stößel (26) mit der Kolbenstange (34) eines pneumatischen oder hydraulischen Antriebszylinders (30) starr verbunden ist, **dadurch gekennzeichnet,** daß der Verdrängungskörper (22) und der Stößel (26) einen mit dem Innenraum des Förderzylinders (20) kommunizierenden durchgehenden Axialkanal (24) aufweisen, der über ein mit dem Stößel (26) mitbewegtes, außerhalb des Antriebszylinders (30) vorbeigeführtes Leitungsstück (42) mit der Förderleitung (40) verbunden ist.

2. Vorrichtung nach Anspruch 1, **dadurch gekennzeichnet,** daß das Leitungsstück (42) als starres Rohrstück und die Förderleitung (40) als flexibler Schlauch oder als Gelenkrohr ausgebildet sind.

3. Vorrichtung nach Anspruch 1, **dadurch gekennzeichnet,** daß das Leitungsstück (42) als flexibles Schlauchstück oder als Gelenkrohr ausgebildet ist.

4. Vorrichtung nach einem der Ansprüche 1 bis 3, **dadurch gekennzeichnet,** daß in dem Leitungsstück (42) vorzugsweise an dessen förderleitungsseitigem Ende, ein wechselweise mit dem saugseitigen Absperrorgan (18) verschließbares druckseitiges Absperrorgan (44) angeordnet ist.

5. Vorrichtung nach einem der Ansprüche 1 bis 4, **dadurch gekennzeichnet,** daß die Absperrorgane als über eine zentrale Steuerungseinrichtung ansteuerbare Ventile oder Absperrhähne (18,44) ausgebildet sind.

6. Vorrichtung nach einem der Ansprüche 1 bis 5, **dadurch gekennzeichnet,** daß der Stößel (26) berührungsfrei durch das stangenseitige Ende des Förderzylinders (20) hindurchgeführt ist.

7. Vorrichtung nach einem der Ansprüche 1 bis 6, **dadurch gekennzeichnet,** daß der Stößel des Verdrängungskörpers (22) und die Antriebskolbenstange (34) über ein das seitlich überstehende Leitungsstück (42) übergreifendes Joch (36) miteinander verbunden sind.

8. Vorrichtung nach einem der Ansprüche 1 bis 7, **dadurch** **gekennzeichnet**, daß das Leitungsstück (42) fluchtend an das stromabseitige Axialkanalende (24) des Stößels (26) angeschlossen und als gebogenes Rohr- oder Schlauchstück ausgebildet ist.

9. Vorrichtung nach einem der Ansprüche 1 bis 8, **dadurch gekennzeichnet,** daß der Stößel (26), das Leitungsstück (42) und die Förderleitung (40) eine Heizwicklung tragen.

10. Vorrichtung nach einem der Ansprüche 1 bis 9, **dadurch gekennzeichnet,** daß der Förderzylinder (20) eine vorzugsweise als Heizwicklung oder Heizpatrone ausgebildete Heizeinrichtung aufweist.

11. Vorrichtung nach einem der Ansprüche 1 bis 10, **dadurch gekennzeichnet,** daß der Vorratsbehälter (12) mittels einer Heizeinrichtung aufheizbar ist.

12. Vorrichtung nach einem der Ansprüche 1 bis 11, **dadurch gekennzeichnet,** daß der Axialkanal (24) an seinem zum Förderzylinderinneren weisen den freien Ende (46) trichterförmig erweitert ist.

13. Vorrichtung nach einem der Ansprüche 1 bis 12, **dadurch gekennzeichnet,** daß der Vorratsbehälter (12) als Faßpresse und der Druckkolben als mit einem Auslaßstutzen (16) versehene, gegen den Faßinhalt anpreßbare Folgeplatte (14) ausgebildet ist, und daß der Förderzylinder (20) mit seiner saugseitigen Öffnung lösbar mit dem Auslaßstutzen (16) der Folgeplatte (14) verbunden ist.

14. Vorrichtung nach Anspruch 13, **dadurch gekennzeichnet,** daß das saugseitige Absperrorgan (18) am Auslaßstutzen (16) der Folgeplatte (14) angeordnet ist.

15. Vorrichtung nach einem der Ansprüche 1 bis 14, **dadurch gekennzeichnet,** daß der Antriebszylinder (30) als doppeltwirkender Pneumatik- oder Hydraulikzylinder ausgebildet ist.

## Claims

1. Apparatus for conveying or metering viscous substances (10), in particular adhesives or sealants which are flowable in their heated state, from a storage container (12) which may be emptied by means of a pressure piston (14), through a feed line (40) to a spreading device (38), having a delivery cylinder (20), which is connected at the suction side by a selectively closable shut-off device (18) to the storage container (12) and at the discharge end by the feed line (40) to the spreading device (38), and having a displacement element (22), which is disposed displaceably in the delivery cylinder (20) and is rigidly connected by a plunger (26), which engages through a rear cylinder opening, to the piston rod (34) of a pneumatic or hydraulic operating cylinder (30), **characterized in that** the displacement element (22) and the plunger (26) have a continuous axial channel (24), which communicates with the interior of the delivery cylinder (20) and is connected to the feed line (40) by a line piece (42), which is moved with the plunger (26) and is led past outside of the operating cylinder (30).

2. Apparatus according to claim 1, **characterized in that** the line piece (42) takes the form of a rigid pipe piece and the feed line (40) takes the form of a flexible tube or a flexible conduit.

3. Apparatus according to claim 1, **characterized in that** the line piece (42) takes the form of a flexible tube piece or a flexible conduit.

4. Apparatus according to one of claims 1 to 3, **characterized in that** disposed in the line piece (42), preferably at its feed-line end, is a discharge-end shut-off device (44) which is closable alternately with the suction-side shut-off device (18).

5. Apparatus according to one of claims 1 to 4, **characterized in that** the shut-off devices take the form of valves or stopcocks (18, 44) which are controllable by means of a central control arrangement.

6. Apparatus according to one of claims 1 to 5, **characterized in that** the plunger (26) is led in a contact-free manner through the rod-side end of the delivery cylinder (20).

7. Apparatus according to one of claims 1 to 6, **characterized in that** the plunger (26) of the displacement element (22) and the operating piston rod (34) are connected to one another by a yoke (36) which overlaps the laterally protruding line piece (42).

8. Apparatus according to one of claims 1 to 7, **characterized in that** the line piece (42) is connected in an aligned manner to the downstream axial channel end (24) of the plunger (26) and takes the form of a bent pipe or tube piece.

9. Apparatus according to one of claims 1 to 8, **characterized in that** the plunger (26), the line piece (42) and the feed line (40) carry a heating winding.

10. Apparatus according to one of claims 1 to 9, **characterized in that** the delivery cylinder (20) has a heating device preferably in the form of a heating winding or a heating cartridge.

11. Apparatus according to one of claims 1 to 10, **characterized in that** the storage container (12) may be heated up by means of a heating device.

12. Apparatus according to one of claims 1 to 11, **characterized in that** the axial channel (24) is widened in a funnel-like manner at its free end (46) directed towards the interior of the delivery cylinder.

13. Apparatus according to one of claims 1 to 12, **characterized in that** the storage container (12) takes the form of a cask press and the pressure piston takes the form of a follow-up plate (14), which is provided with a discharge connection piece (16) and is pressable against the cask contents, and that the delivery cylinder (20) is connected by its suction-side opening detachably to the discharge connection piece (16) of the follow-up plate (14).

14. Apparatus according to claim 13, **characterized in that** the suction-side shut-off device (18) is disposed on the discharge connection piece (16) of the follow-up plate (14).

15. Apparatus according to one of claims 1 to 14, **characterized in that** the operating cylinder (30) takes the form of a double-action pneumatic or hydraulic cylinder.

## Revendications

1. Dispositif de transport et de dosage de produits visqueux (10), en particulier d'adhésifs ou de matières d'étanchéité fluides à l'état chauffé, d'un réservoir (12) pouvant être vidé au moyen d'un piston de refoulement (14) à un appareil d'application (38) par une conduite de transport (40), comportant un cylindre de refoulement (20) relié du côté aspiration au réservoir (12) par un organe d'arrêt (18) pouvant être fermé sélectivement et du côté refoulement à l'appareil d'application (38) par la conduite de transport (40), et un corps de déplacement (22) monté mobile dans le cylindre de refoulement (20) et relié rigidement à la tige de piston (34) d'un vérin pneumatique ou hydraulique (30) par une tige-poussoir (26) passant par une ouverture arrière du cylindre de refoulement (20), caractérisé par le fait que le corps de déplacement (22) et la tige-poussoir (26) sont traversés par un conduit axial (24) qui communique avec l'intérieur du cylindre de refoulement (20) et est relié à la conduite de transport (40) par un morceau de conduite (42) mû avec la tige-poussoir (26) et passant devant le cylindre moteur (30).

2. Dispositif selon la revendication 1, caractérisé par le fait que le morceau de conduite (42) est constitué d'un morceau de tube rigide et la conduite de transport (40) constituée d'un tuyau souple ou d'un tube articulé.

3. Dispositif selon la revendication 1, caractérisé par le fait que le morceau de conduite (42) est constitué d'un morceau de tuyau souple ou d'un tube articulé.

4. Dispositif selon l'une des revendications 1 à 3, caractérisé par le fait que sur le morceau de conduite (42) est monté, de préférence à son extrémité située du côté de la conduite de transport, un organe d'arrêt côté refoulement (44) qui peut être fermé en alternance avec l organe d'arrêt situé du côté aspiration.

5. Dispositif selon l'une des revendications 1 à 4, caractérisé par le fait que les organes d'arrêt sont des soupapes ou des robinets d'arrêt (18, 44) pouvant être commandés par un dispositif de commande central.

6. Dispositif selon l'une des revendications 1 à 5, caractérisé par le fait que la tige-poussoir (26) traverse sans contact l'extrémité côté tige du cylindre de refoulement (20).

7. Dispositif selon l'une des revendications 1 à 6, caractérisé par le fait que la tige-poussoir du corps de déplacement (22) et la tige (34) du piston moteur sont reliées par un joug (36) coiffant le morceau de conduite saillant latéralement (42).

8. Dispositif selon l'une des revendications 1 à 7, caractérisé par le fait que le morceau de conduite (42) est monté, aligné, à l'extrémité aval du conduit axial (24) de la tige-poussoir (26) et constitué d'un morceau de tube ou de tuyau souple courbé.

9. Dispositif selon l'une des revendications 1 à 8, caractérisé par le fait que la tige-poussoir (26), le morceau de conduite (42) et la conduite de transport (40) portent un enroulement chauffant.

10. Dispositif selon l'une des revendications 1 à 9, caractérisé par le fait que le cylindre de refoulement (20) présente un dispositif de chauffage constitué de préférence d' un enroulement chauffant ou d'une cartouche chauffante.

11. Dispositif selon l'une des revendications 1 à 10, caractérisé par le fait que le réservoir (12) peut être chauffé au moyen d'un dispositif de chauffage.

12. Dispositif selon l'une des revendications 1 à 11, caractérisé par le fait que le conduit axial (24) est élargi en entonnoir à son extrémité libre (46) dirigée vers l'intérieur du cylindre de refoulement.

13. Dispositif selon l'une des revendications 1 à 12, caractérisé par le fait que le réservoir (12) est constitué d'une presse de fût et le piston de refoulement constitué d'une plaque suiveuse (14) pourvue d'une tubulure de sortie (16) et pouvant être pressée contre le contenu du fût, et que le cylindre de refoulement (20) est, à son orifice côté aspiration, joint de manière démontable à la tubulure de sortie (16) de la plaque suiveuse (14).

14. Dispositif selon la revendication 13, caractérisé par le fait que l'organe d'arrêt (18) situé du côté aspiration est monté sur la tubulure de sortie (16) de la plaque suiveuse (14).

15. Dispositif selon l'une des revendications 1 à 14, caractérisé par le fait que le cylindre moteur (30) est constitué d'un vérin pneumatique ou hydraulique à double effet.
